# EUROPÄISCHE PATENTSCHRIFT

(11) **EP 1 987 580 B1**
(45) Veröffentlichungstag und Bekanntmachung des Hinweises auf die Patenterteilung: **12.04.2017**
(21) Anmeldenummer: 07704425.3
(22) Anmeldetag: 07.02.2007
(51) Int. Cl.: H02K 11/01, H02K 11/33, H02K 11/40, H01R 4/64

(54) **FUNKENTSTÖRTE ANTRIEBSEINHEIT, INSBESONDERE ZUM ANTRIEB EINES KRAFTFAHRZEUGGEBLÄSES**
RADIO-SUPPRESSED DRIVE UNIT, IN PARTICULAR FOR DRIVING A MOTOR VEHICLE FAN
UNITE D'ENTRAINEMENT ANTIPARASITEE, NOTAMMENT POUR ENTRAINER UNE SOUFFLERIE DE VEHICULE AUTOMOBILE

(30) Priorität: 17.02.2006 DE 102006007416
(43) Veröffentlichungstag der Anmeldung: 05.11.2008
(73) Patentinhaber: Brose Fahrzeugteile GmbH & Co. KG, Würzburg, 97076 Würzburg (DE)
(72) Erfinder: GÖB, Werner, 97273 Kürnach (DE); STÖHLING, Marco, 97795 Schondra (DE); WAHLER, Holger, 97727 Fuchsstadt (DE); BERG, Ralf, 97080 Würzburg (DE)
(74) Vertreter: Isarpatent
(86) Internationale Anmeldenummer: PCT/EP2007/051170
(87) Internationale Veröffentlichungsnummer: WO 2007/093544

(56) Entgegenhaltungen:
- EP-A1- 1 195 850
- EP-A2- 1 235 329
- DE-A1- 19 811 543
- DE-A1- 19 852 877
- DE-T2- 60 019 037

## Beschreibung

Die Erfindung betrifft eine funkentstörte Antriebseinheit, insbesondere zum Antrieb eines Kraftfahrzeuggebläses, mit einem Elektromotor und einer mit dem Elektromotor verbundenen Steuereinheit.

Zur Funkentstörung von Elektromotoren sind üblicherweise besondere Kontaktverbindungen zum Potentialausgleich zwischen der Batterie-Minus-Leitung (Masseanschluss) des Speiseanschlusses des Elektromotors und dem Stator(Gehäuse)-15 Teil des Elektromotors vorgesehen, wie dies zum Beispiel durch das Dokument EP 0 504 469 B1 bekannt ist. Zusätzlich können Funkentstör-Bauelemente, wie beispielsweise Entstördrosseln und Entstörkondensatoren, vorgesehen werden. So werden Entstördrosseln bzw. Entstörkondensatoren, wie zum Beispiel in EP 0 880 218 B1 offenbart, beispielsweise in Serie bzw. parallel zu der Rotorwicklung des Elektromotors geschaltet.

Die EP 1 235 329 A2 beschreibt einen Stellantrieb mit angebautem Elektronikmodul, welches mit dem Stellantrieb über eine schwingungsisolierte Koppeleinrichutng verbunden ist. Das Elektronikmodul ist mittels einer Zuganker-Baugruppe mit einem Statorgehäuse verbunden, wobei das Elektronikmodul über einen Metallstreifen mit dem Stator-Gehäuse elektrisch gekoppelt ist.

Die DE 198 11 543 A1 beschreibt einen bürstenlosen Motor. Zum Angleichen des Potentials eines Kühlkörpers sind der Kühlkörper und eine Quellenleitung durch eine Kurzschlussleitung verbunden.

Die Herstellung des Massekontaktes und die Montage der Funkentstör-Bauelemente ist oft aufwändig. Zudem werden häufig platzraubende Montagevorrichtungen, wie beispielsweise Klemmbretter oder dergleichen, benötigt.

Eine Aufgabe der vorliegenden Erfindung ist es, eine Antriebseinheit aus Elektromotor mit zugehöriger Steuereinheit bereitzustellen, bei der die Steuereinheit in die Maßnahmen zur Funkentstörung, insbesondere im UKW-Bereich, auf besonders einfache und preiswerte Art und Weise einbezogen ist und damit die Funkentstörung für die Antriebseinheit insgesamt verbessert wird.

Diese Aufgabe wird durch eine Antriebseinheit, insbesondere zum Antrieb eines Kraftfahrzeuggebläses, nach Anspruch 1 gelöst. Danach ist es vorgesehen, dass ein elektrisch leitfähiges Gehäuseteil der Steuereinheit mit der Batterie-Minus-Leitung (Masse-Anschluss) des Elektromotors elektrisch verbunden ist. Die derart hergestellte Masseverbindung dient insbesondere dem zu einer vollkommenen Funkentstörung notwendigen Potentialausgleich zwischen der Masse der Kraftfahrzeug-Karosserie und dem Motorgehäuse sowie dem Gehäuse der Steuereinheit. Damit wird die Funkentstörung der gesamten Antriebseinheit besonders im UKW-Bereich maßgeblich verbessert.

Da keine zusätzlichen Funkentstör-Bauelemente benötigt werden, ist der Teile- und Montageaufwand gering. Die erfindungsgemäße Lösung ermöglicht somit eine besonders kostengünstige und einfache Verbesserung der Funkentstörung.

Die Erfindung ist besonders für Antriebseinheiten zum Antrieb von Kraftfahrzeuggebläsen geeignet, da dort die Verbindung zwischen einem Gehäuseteil der Steuereinheit, das gleichwohl als Kühlkörper ausgebildet sein kann, und der Masse-Anschlussleitung des Elektromotors besonders einfach herstellbar ist. Darüber hinaus ist die erfindungsgemäße Lösung jedoch auch bei anderen Antriebseinheiten verwendbar, bei denen auf einfache Art und Weise eine Funkentstörung erreicht werden soll.

Vorteilhafte Ausgestaltungen der Erfindung sind in den Unteransprüchen angegeben.

Eine besonders einfache Kontaktierung von Masse-Anschlussleitung und Kühlkörper ist möglich, weil ein abisolierter Teil der Masse-Anschlussleitung in einem Klemmbereich zwischen einem elektrisch leitfähigen Gehäuseteil der Steuereinheit und einem Gegenelement verklemmt ist.

Bei dem Gegenelement handelt es sich um einen Teil eines vorzugsweise Kunststoff-Gehäuses zur Aufnahme des Elektromotors und der Steuereinheit. Die Masse-Anschlussleitung ist mit anderen Worten zwischen diesem Gehäuse und dem elektrisch leitfähigen Gehäuseteil der Steuereinheit verklemmt.

Eine besonders sichere Klemmwirkung wird dadurch erzielt, wenn der Teil des Kunststoff-Gehäuses, der zum Verklemmen der Masse-Anschlussleitung dient, als Federelement ausgebildet ist. Ein solches als integraler Bestandteil des Gehäuses ausgebildetes Federelement erhöht den Anpressdruck auf die Masse-Anschlussleitung und damit die Klemmwirkung, wodurch gleichzeitig ein sicherer, guter elektrischer Kontakt hergestellt ist.

In einer weiteren Ausführungsform der Erfindung ist das Gegenelement als ein separates Federelement vorgesehen, das an einem Teil des Kunsstoff-Gehäuses des Elektromotors befgestigt ist, das gleichzeitig zur Aufnahme der Steuereinheit dient. Das Federelement ist mit anderen Worten kein integraler Bestandteil des Gehäuses. Zwar erhöht sich dadurch gegenüber den zuvor beschriebenen Ausführungsformen die Anzahl der benötigten Einzelteile. Jedoch ermöglich die Verwendung eines separaten Federelements eine besonders flexible Montage, da mit Hilfe unterschiedlicher Federelemente baugrößenbedingte Toleranzen bei der Masse-Anschlussleitung sowie bei dem Gehäuse der Steuereinheit ausgeglichen werden können.

Eine noch zuverlässigere Klemmverbindung wird erreicht, wenn das Gehäuse der Steuerungseinheit oder das Gegenelement in dem Klemmbereich eine veränderte Oberflächenstruktur zur sicheren Kontaktierung des abisolierten Teils der Masse-Anschlussleitung aufweist. Dabei handelt es sich vorzugsweise um eine ein- oder beidseitig angeordnete Zahnung oder um eine entsprechende Anordnung von Zacken oder Dornen oder dergleichen derart, dass die Masse-Anschlussleitung zusätzlich zwischen den Zähnen, Zacken oder Dornen etc. fixiert wird.

Ein weiterer Lösungsansatz geht nicht von einer alleinigen Verklemmung der Masse-Anschlussleitung zwischen dem Gehäuse der Steuereinheit und einem Gegenelement aus. Stattdessen ist das Federelement mit der Masse-Anschlussleitung beispielsweise durch eine Krimpverbindung fest verbunden und ggf. auch elektrisch kontaktiert. Anderseits ist das Federelement so gestaltet, dass es an geeigneter Stelle der Aufnahmeöffnung des Kunststoff-Gehäuses, die die Steuereinheit aufnimmt, einfach aufgesteckt und somit fixiert werden kann. Nach der Montage der Steuereinheit liegt das Federelement wiederum federnd an dem leitfähigen Gehäuseteil der Steuereinheit an oder drückt einen abisolierten Bereich der Anschlussleitung gegen diesen und stellt so den Massekontakt her. Mit anderen Worten erfolgt also nicht in jedem Fall eine direkte elektrische Kontaktierung zwischen Masse-Anschlussleitung und Gehäuse der Steuereinheit. Eine elektrische Verbindung zwischen diesen Elementen kann auch mittelbar über das Federelement hergestellt werden, das zu diesem Zweck zumindest teilweise aus einem elektrisch leitenden Material besteht.

Bei der zuletzt beschriebenen Ausführungsform erfolgt die Verbindung zwischen Masse-Anschlussleitung und Federelement besonders kostengünstig und sicher über eine Crimpverbindung. Dadurch ist eine Vorkonfektionierung der Masse-Anschlussleitung mit dem Federelement möglich, wodurch der Montagevorgang weiter vereinfacht wird. Darüber hinaus gewährleistet diese Ausführungsform eine besonders sichere Positionierung des Kontaktbereiches der Masse-Anschlussleitung relativ zu dem Kühlkörper der Steuereinheit.

Das oben genannte Gehäuse, in dem der Elektromotor montiert ist, ist vorzugsweise aus einem Kunststoffmaterial gefertigt und somit nicht leitend. Zugleich dient das Gehäuse auch als Adapter zur Schwingungsentkopplung und zur Montage an die Gebläseeinheit des Kraftfahrzeuges. Die Steuereinheit ist ebenfalls in diesem Kunststoffgehäuse montiert bzw. an dem Kunststoffgehäuse befestigt.

Das elektrisch leitfähige Gehäuseteil der Steuereinheit ist in der bevorzugten Ausführungsform gleichzeitig als Kühlkörper für die Steuerelektronik ausgebildet oder umgekehrt betrachtet dient der Kühlkörper der Steuerelektronik gleichzeitig als ein Gehäuseteil.

Gemäß der Erfindung weist das Gehäuse eine Öffnung auf, in welcher der Kühlkörper (Gehäuseteil) der Steuereinheit angeordnet ist. Zugleich verläuft die Masse-Anschlussleitung durch diese Öffnung. Das bedeutet, dass der Klemmbereich zur elektrischen Kontaktierung von Masse-Anschlussleitung und Kühlkörper durch die Lage des Kühlkörpers in der Öffnung des Gehäuses bestimmt wird.

Die Versorgungsleitung des Elektromotors, die neben der Masse Anschlussleitung auch eine Plus-Anschlussleitung aufweist, verläuft von außen durch diese Öffnung des Gehäuses hindurch zu einem Versorgungsanschluss des Elektromotors. Dabei dient der Rand der Öffnung (entweder direkt oder mittels eines integrierten Federelements) zum Verklemmen der Masse-Anschlussleitung an dem Gehäuse der Steuereinheit bzw. zum Befestigen eines den Kühlkörper der Steuereinheit kontaktierenden Federelements, welches mit der Masse-Anschlussleitung verbunden ist. Die Öffnung des Gehäuses ist dabei vorzugsweise derart dimensioniert, dass die Steuereinheit einerseits sicher in der Öffnung befestigbar ist und andererseits ausreichend Platz zur Durchführung der Versorgungsleitung oder wenigstens der Masse-Anschlussleitung zur Verfügung steht. Je nachdem, ob eine Ausführung mit einem Federelement oder eine Ausführung ohne Federelement vorgesehen ist, ist der für die Durchführung der Masse-Anschlussleitung bereitgestellt Platz dabei mehr oder weniger knapp bemessen.

Die Erfindung wird nachfolgend anhand von Ausführungsbeispielen beschrieben, die mit Hilfe von Zeichnungen näher erläutert werden. Hierbei zeigen in vereinfachten, z. T. schematisches Darstellungen:
- FIG 1: eine erfindungsgemäße Antriebseinheit in Blockdarstellung,
- FIG 2: eine Schnittdarstellung einer Steuereinheit in einer Gehäuseöffnung,
- FIG 3: eine Gehäuseöffnung mit integriertem Federelement,
- FIG 4: eine Gehäuseöffnung mit separatem Federelement,
- FIG 5: ein separates Federelement,
- FIG 6: ein separates Federelement mit Crimpverbindung,
- FIG 7: einen Kontaktbereich des Steuereinheit-Kühlkörpers mit Haltezacken, und
- FIG 8: ein Diagramm mit verschiedenen Funkstörspannungsmesskurven.

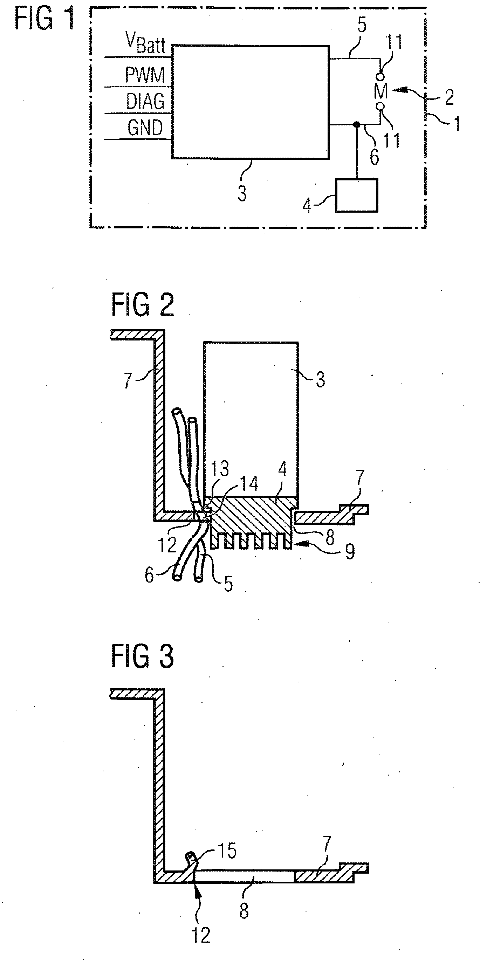

In den Ausführungsbeispielen ist eine Antriebseinheit 1 zum Antrieb eines Kraftfahrzeuggebläses beschrieben, vgl. FIG 1. Die Antriebseinheit 1 umfasst einen Elektromotor 2 und einen mit dem Elektromotor 2 verbundene Steuereinheit 3 (Steuerelektronik), die einen elektrisch leitenden Kühlkörper 4 aufweist. Bei dem Elektromotor 2 handelt es sich zum Beispiel um einen herkömmlichen Gleichstrom-Kommutatormotor, um einen bürstenlos kommutierten Elektromotor oder dergleichen. Die Steuereinheit 3 ist mit den Eingangsanschlüssen V_{Batt} (Batteriespannung; Plus) und GND (Masse) versehen. Bei der Steuereinheit 3 handelt es sich um einen PWM (Pulsweitenmodulation)-Steller, der über einen entsprechenden PWM-Eingang verfügt. Darüber hinaus verfügt die Steuereinheit 3 über einen Diagnoseanschluss (DIAG). Zur Stromversorgung des Elektromotors 2 ist eine elektrische Versorgungsleitung mit einer Plus-Anschlussleitung 5 und einer Masse-Anschlussleitung 6 vorgesehen. Weiterhin ist ein Kühlkörper 4 vorgesehen, der gleichzeitig als elektrisch leitfähiges Gehäuseteil der Steuereinheit 3 dient und erfindungsgemäß mit der Masse-Anschlussleitung 6 des Elektromotors 2 elektrisch verbunden ist. Mit anderen Worten liegt das Kühlkörper-Gehäuse-Potential des Kraftfahrzeug-Gebläsereglers (also der Steuereinheit 3) an der Minusleitung (Masse-Anschlussleitung 6) des Kraftfahrzeug-Gebläsemotors (also des Elektromotors 2) an.

Wie in FIG 2 dargestellt, ist die Steuereinheit 3 mit ihrem Kühlkörper 4 mit einem Gehäuse 7 aus Kunststoffmaterial verbunden, in dem auch der Elektromotor 2 montiert ist. Hierzu ist der Kühlkörper 4 in einer Öffnung 8 des Gehäuses 7 festgelegt, wobei die Kühlrippen 9 des Kühlkörpers 4 durch die Öffnung 8 hindurch in den vom Gebläserad erzeugten Luftstrom hineinragen. Das Gehäuse 7 dient u. a. als Adapter zur Schwingungsentkopplung und zur Montage an die Gebläseeinheit (nicht dargestellt).

Plus-Anschlussleitung 5 und Masse-Anschlussleitung 6 des Elektromotors 2 verlaufen von außen durch die Öffnung 8 des Gehäuses 7 hindurch zu entsprechenden Versorgungsanschlüssen 11 des Elektromotors 2, siehe FIG 1.

Im einem ersten Ausführungsbeispiel, wie es beispielhaft in FIG 2 dargestellt ist, wird im montierten Zustand der Steuereinheit 3 in dem Gehäuse 7 die Masse-Anschlussleitung 6 zwischen dem als Gegenelement wirkenden Rand 12 der Öffnung 8 und einer Kante 13 des elektrisch leitenden Kühlkörpers 4 verklemmt. Im Bereich der Öffnung 8 ist die Masse-Anschlussleitung 6 auf einem Teilstück 14 abisoliert. Somit wird eine elektrische Verbindung zwischen Masse-Anschlussleitung 6 und Kühlkörper 4 hergestellt. Die Größe der Öffnung 8, die Abmessungen des Kühlkörpers 4 und die Durchmesser der Anschlussleitungen 5, 6 sind derart aufeinander abgestimmt, dass im Montageendzustand eine sichere Klemmkontaktierung der Masse-Anschlussleitung 6 vorliegt.

Ein weiteres Ausführungsbeispiel zeigt beispielhaft FIG 3. Dabei ist der Rand 12 der Öffnung 8 als Federelement 15 ausgebildet. Das Federelement 15 erstreckt sich dabei vorzugsweise zungenförmig von dem Rand 12 in Richtung Öffnungsmitte, so dass es im Montageendzustand die Masse-Anschlussleitung 6 in Richtung Kühlkörper 4 federnd beaufschlagt. Damit wird eine besonders sichere Kontaktverbindung erzielt.

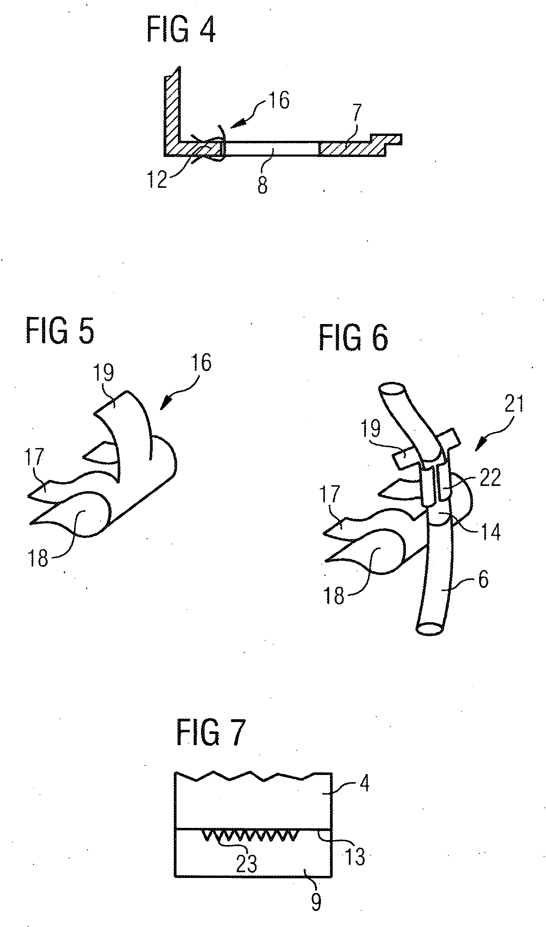

In einem weiteren Ausführungsbeispiel, wie es beispielhaft in FIG 4 abgebildet ist, kommt ein separates Federelement 16 zum Einsatz. Das Federelement 16, das perspektivisch in FIG 5 gezeigt wird, ist nach Art einer Aufsteckfeder ausgeführt und wird auf den Rand 12 der Öffnung 8 des Gehäuses 7 aufgesteckt oder aufgeschoben. Das Federelement 16 besteht im wesentlichen aus einem U-förmigen Grundkörper, dessen gegeneinander federnden U-Schenkel 17, 18 zur Montage an dem Rand 12 der Öffnung 8 auseinandergebogen werden und als Klemmelemente zur Befestigung des Federelements 16 an dem Rand 12 dienen. Aus einem der U-Schenkel 17 ist eine Federzunge 19 herausgebogen. Diese erstreckt sich im montierten Zustand von dem Rand 12 der Öffnung 8 in Richtung Öffnungsmitte, so dass sie im Montageendzustand die Masse-Anschlussleitung 6 in Richtung Kühlkörper 4 federnd beaufschlagt.

In einem weiteren Ausführungsbeispiel (nicht abgebildet) ist ein Federelement, beispielsweise ein Federelement 16, wie es in FIG 5 dargestellt ist, im Bereich der Öffnung 8 in das Gehäuse 7 eingespritzt, so dass sich ein integriertes Federelement, ähnlich wie in FIG 3 gezeigt, ergibt.

In einem weiteren Ausführungsbeispiel kommt bei einem Gehäuse 7, wie in FIG 4 dargestellt, ein separates Federelement 21 zur Anwendung, wie es beispielhaft in FIG 6 dargestellt ist. Das Federelement 21 entspricht im wesentlichen dem in FIG 5 abgebildeten Federelement 16. Im Montageendzustand erfolgt jedoch keine Verklemmung der Masse-Anschlussleitung 6 zwischen der Federzunge 19 des Federelements 21 und dem Kühlkörper 4 der Steuereinheit 3. Stattdessen ist die Masse-Anschlussleitung 6 mechanisch mittels einer Crimpverbindung fest mit der Federzunge 19 verbunden. Hierzu werden die Kanten 22 der Federzunge 19 flügelartig um den abisolierten Teil 13 der Masse-Anschlussleitung 6 gebogen und fixiert. Die elektrische Verbindung zwischen Masse-Anschlussleitung 6 und Kühlkörper 4 erfolgt somit über das Federelement 21, genauer gesagt über dessen Federzunge 19. Zumindest die Federzunge 19 besteht daher in diesem Fall zwingend aus einem elektrisch leitenden Material, während das in den FIG 4 und 5 gezeigte Federelement 16 auch aus einem Kunststoffmaterial gefertigt sein kann.

In den Fällen, in denen keine Fixierung der Masse-Anschlussleitung 6 relativ zu dem Klemmbereich erfolgt, wie dies beispielsweise bei der Verwendung eines Federelements 21 nach FIG 6 der Fall ist, kann eine besonders sichere Positionierung der Masse-Anschlussleitung 6 durch die Verwendung von Haltezacken oder dergleichen erfolgen. Beispielhaft ist in FIG 7 ein Ausführungsbeispiel dargestellt, bei dem im Klemmbereich des Kühlkörpers 4, genauer gesagt an der Kante 13 des Kühlkörpers 4, welche die Masse-Anschlussleitung 6 im montierten Zustand kontaktiert, vgl. FIG 2, eine Reihe von Haltezacken 23 zur sicheren Kontaktierung des abisolierten Teilstücks 14 der Masse-Anschlussleitung 6 vorgesehen ist.

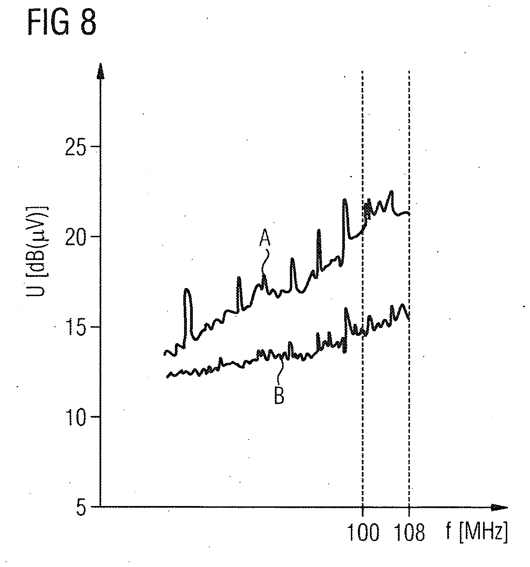

Mit der vorliegenden Erfindung wird eine Funkentstörung der Antriebseinheit 1 besonders im UKW-Bereich erreicht. FIG 8 zeigt ein Diagramm mit zwei Funkstörspannungsmesskurven, die bei einer Motorspannung von 80% aufgenommen wurde. Dabei ist die Funkstörspannung in Abhängigkeit von der Frequenz aufgetragen. Die Messkurve A, welche die Ergebnisse einer Messung ohne Kontaktierung des Kühlkörperpotentials darstellt, zeigt im Bereich um 100 MHz eine deutlich höhere Funkstörspannung als die Messkurve B, welche die Ergebnisse einer Messung mit einer erfindungsgemäßen Kontaktierung des Kühlkörperpotentials darstellt. Im Beispiel konnte durch Anwendung der Erfindung die Funkstörspannung um mehr als ein Drittel gesenkt werden.

## Patentansprüche

1. Funkentstörte Antriebseinheit (1), insbesondere zum Antrieb eines Kraftfahrzeuggebläses, mit einem Elektromotor (2) und einer mit dem Elektromotor (2) verbundenen Steuereinheit (3), wobei die Steuereinheit (3) einen elektrisch leitenden Gehäuseteil(4) aufweist, und mit einem Stromversorgungsanschluss zur Stromversorgung des Elektromotors (2), der eine Masse-Anschlussleitung (6)aufweist, **dadurch gekennzeichnet, dass** zwischen dem elektrisch leitenden Gehäuseteil (4) der Steuereinheit (3) und der Masse-Anschlussleitung (6) des Elektromotors (2) ein elektrischer Kontakt hergestellt ist, wobei ein abisoliertes Teilstück (14) der Masse-Anschlussleitung (6) in einem Klemmbereich zwischen dem elektrisch leitenden Gehäuseteil (4) der Steuereinheit (3) und einem Gegenelement verklemmt ist, und wobei das Gegenelement ein Teil (12) eines Gehäuses (7) zur Aufnahme des Elektromotors (2) und der Steuereinheit (3) ist, wobei das Gehäuse (7) eine Öffnung (8) aufweist, in welcher der elektrisch leitenden Gehäuseteil(4) der Steuereinheit (3) angeordnet ist und durch welche die Masse-Anschlussleitung (6) verläuft, wobei der Rand (12) der Öffnung (8) den Teil des Gehäuses (7) zum Verklemmen der Masse-Anschlussleitung (6) oder zum Befestigen eines Federelements (16, 21) bildet.

2. Antriebseinheit (1) nach Anspruch 1,
**dadurch gekennzeichnet, dass** der elektrisch leitende Gehäuseteil der Steuereinheit als Kühlkörper (4) für die Steuereinheit (3) ausgebildet ist.

3. Antriebseinheit (1) nach Anspruch 1 oder 2,
**dadurch gekennzeichnet, dass** das Gegenelement als Federelement (15) ausgebildet ist.

4. Antriebseinheit (1) nach einem der Ansprüche 1- 3, **dadurch gekennzeichnet, dass** das Gegenelement ein Federelement (16) ist, welches an einem Teil (12) des Gehäuses (7) zur Aufnahme des Elektromotors (2) befestigt ist.

5. Antriebseinheit (1) nach einem der Ansprüche 1 bis 4, **dadurch gekennzeichnet, dass** der elektrisch leitende Gehäuseteil der Steuereinheit (4) und/oder das Gegenelement (12, 15, 16) in dem Klemmbereich eine veränderte Oberflächenstruktur (23), insbesondere Zacken oder Zähne, zur sicheren Kontaktierung der Masse-Anschlussleitung (6) aufweist.

6. Antriebseinheit (1) nach einem der Ansprüche 1 bis 5, **dadurch gekennzeichnet, dass** die Masse-Anschlussleitung (6) mit einem zumindest teilweise elektrisch leitenden Federelement (21) mechanisch und elektrisch verbunden ist, welches an einem Teil (12) eines Gehäuses (7) zur Aufnahme des Elektromotors (2) und der Steuereinheit derart befestigt ist, dass angefederter elektrischer Kontakt zwischen dem elektrisch leitenden Gehäuseteil(4) der Steuereinheit (3) und der Masse-Anschlussleitung (6) hergestellt ist.

7. Antriebseinheit (1) nach Anspruch 6, **dadurch gekennzeichnet, dass** die Masse-Anschlussleitung (6) mit dem Federelement (21) über eine Crimpverbindung verbunden ist.

## Claims

1. Radio-suppressed drive unit (1), in particular for driving a motor vehicle fan, which has an electric motor (2) and a control unit (3) connected thereto, the control unit (3) having an electrically conductive housing part (4), and which has a power supply connection for supplying power to the electric motor (2) which has an earth-connecting line (6), **characterised in that** electrical contact is made between the electrically conductive housing part (4) of the control unit (3) and the earth-connecting line (6) of the electric motor (2), wherein an insulated portion (4) of the earth-connecting line (6) is clamped in a clamping region between the electrically conductive housing part (4) of the control unit (3) and a counter-element, and the counter-element forming a portion (12) of a housing (7) for accommodating the electric motor (2) and control unit (3), the housing (7) having an opening (8) in which the electrically conductive housing part (4) of the control unit (3) is arranged and through which the earth-connecting line (6) passes, with the edge (12) of the opening (8) forming the portion of the housing (7) for clamping the earth-connecting line (6) or for fixing a spring element (16, 21).

2. Drive unit (1) according to claim 1, **characterised in that** the electrically conductive housing part of the control unit is provided as a cooling element (4) for the control unit (3).

3. Drive unit (1) according to claim 1 or 2, **characterised in that** the counter-element is provided as a spring element (15).

4. Drive unit (1) according to any one of claims 1 to 3, **characterised in that** the counter-element is a spring element (16) which is fixed to one part (12) of the housing (7) to accommodate the electric motor (2).

5. Drive unit (1) according to any one of claims 1 to 4, **characterised in that** the electrically conductive housing part of the control unit (4) and/or the counter-element (12, 15, 16) has/have in the clamping region an altered surface structure (23), in particular indentations or teeth, for making secure contact with the earth-connecting line (6).

6. Drive unit (1) according to any one of claims 1 to 5, **characterised in that** the earth-connecting line (6) is connected mechanically and electrically to an at least partially electrically conductive spring element (21) which is fixed to a portion (12) of a housing (7) for accommodating the electric motor (2) and the control unit,, such that spring-loaded electrical contact is made between the electrically conductive housing part (4) of the control unit (3) and the earth-connecting line (6).

7. Drive unit (1) according to claim 6, **characterised in that** the earth-connecting line (6) is connected to the spring element (21) by means of a crimped connection.

## Revendications

1. Unité d'entraînement (1) antiparasitée, notamment pour l'entraînement d'un ventilateur de véhicule automobile, comportant un moteur électrique (2) et une unité de commande (3) reliée au moteur électrique (2), dans laquelle l'unité de commande (3) présente une partie de boîtier (4) électroconductrice, et comportant un raccord d'alimentation électrique pour l'alimentation en courant du moteur électrique (2), qui présente une ligne de connexion à la masse (6), **caractérisée en ce qu'**un contact électrique est établi entre la partie de boîtier (4) électroconductrice de l'unité de commande (3) et la ligne de connexion à la masse (6) du moteur électrique (2), dans laquelle une partie (14) isolée de la ligne de connexion à la masse (6) est serrée dans une zone de serrage entre la partie de boîtier (4) électroconductrice de l'unité de commande (3) et un contre-élément, et dans laquelle le contre-élément est une partie (12) d'un boîtier (7) destiné à loger le moteur électrique (2) et l'unité de commande (3), dans laquelle le boîtier (7) présente une ouverture (8) dans laquelle est disposée la partie de boîtier (4) électroconductrice de l'unité de commande (3) et à travers laquelle s'étend la ligne de connexion à la masse (6), dans laquelle le bord (12) de l'ouverture (8) forme la partie du boîtier (7) destinée à serrer la ligne de connexion à la masse (6) ou à fixer un élément à ressort (16, 21).

2. Unité d'entraînement (1) selon la revendication 1, **caractérisée en ce que** la partie de boîtier électroconductrice de l'unité de commande est réalisée comme corps de refroidissement (4) pour l'unité de commande (3).

3. Unité d'entraînement (1) selon la revendication 1 ou 2, **caractérisée en ce que** le contre-élément est réalisé comme élément élastique (15).

4. Unité d'entraînement (1) selon l'une quelconque des revendications 1 à 3,
**caractérisée en ce que** le contre-élément est un élément élastique (16) qui est fixé sur une partie (12) du boîtier (7) destiné au logement du moteur électrique (2).

5. Unité d'entraînement (1) selon l'une quelconque des revendications 1 à 4, **caractérisée en ce que** la partie de boîtier électroconductrice de l'unité de commande (3) et/ou le contre-élément (12, 15, 16) présentent dans la partie de serrage une structure de surface (23) modifiée, notamment des crans ou des dents, pour la mise en contact fiable de la ligne de connexion à la masse (6).

6. Unité d'entraînement (1) selon l'une quelconque des revendications 1 à 5, **caractérisée en ce que** la ligne de connexion à la masse (6) est raccordée mécaniquement et électriquement à un élément à ressort (21) au moins en partie électroconducteur, lequel est fixé sur une partie (12) d'un boîtier (7) destiné à loger le moteur électrique (2) et l'unité de commande, de manière à ce qu'un contact électrique dû au ressort soit établi entre la partie de boîtier (4) électroconductrice de l'unité de commande (3) et la ligne de connexion à la masse (6).

7. Unité d'entraînement (1) selon la revendication 6, **caractérisée en ce que** la ligne de connexion à la masse (6) est reliée à l'élément à ressort (21) par l'intermédiaire d'une liaison par sertissage.
